# EUROPEAN PATENT SPECIFICATION

(11) **EP 3 034 349 B1**
(45) Date of publication and mention of the grant of the patent: **25.07.2018**
(21) Application number: 14382537.0
(22) Date of filing: 18.12.2014
(51) Int. Cl.: B60K 37/06

(54) **Procedure and system for managing information between devices in an automative vehicle**
Verfahren und System zur Verwaltung von Informationen zwischen Vorrichtungen in einem Kraftfahrzeug
Procédure et système pour gérer des informations entre des dispositifs dans un véhicule automobile

(43) Date of publication of application: 22.06.2016
(73) Proprietor: Seat, S.A., 08760 Martorell (ES)
(72) Inventor: Baños Serradilla, Victor, 08760 Barcelona (ES); Bayona Margarit, Teresa, 08760 BARCELONA (ES); Galarza Osio, Miguel Ángel, 08760 BARCELONA (ES)
(74) Representative: Isern Patentes y Marcas S.L.

(56) References cited:
- DE-A1-102011 100 941
- US-A1- 2005 038 573

## Description

### OBJECT OF THE INVENTION

The present patent application has as object hereof a procedure for managing information between devices in an automotive vehicle, according to Claim 1, incorporating notable innovations and advantages.

Furthermore, the present patent application additionally has as object hereof the system for managing information between devices in an automotive vehicle, according to Claim 10, incorporating notable innovations and advantages.

### BACKGROUND OF THE INVENTION

In the state of the art diverse solutions and procedures are known having the object of managing information between devices in an automotive vehicle.

Thus, there is known that taught in the document US 6812942, wherein there is described a context display system for the use thereof in a vehicle. The display system includes a dashboard display positioned in front of a driver of the vehicle, adapted to display the user interface graphic elements in a predetermined graphic composition, providing information to the driver regarding the operation of the devices in the vehicle. The display system also includes a processor coupled to receive signals from the devices in the vehicle and to drive the display in response thereto, and to alter the graphic composition of the display in response to a selected input to the processor.

There is also known in the state of the art, according to that taught in the document US 2014/0118222, a method for projecting content from a mobile device to an external display device. The method includes discovering characteristics of the external display device in the mobile device. The method also includes reformatting content in the mobile device according to the characteristics discovered of the external display device. The method furthermore includes transmitting the formatted content from the mobile device to the external display device for the display thereof on the external display device. The external display devices may be vehicular display devices, televisions, projectors, etc. When the external display device is a vehicular display device, the mobile device can be used to display the content in the vehicle, thereby enhancing the usefulness of the vehicular display device.

There is also known in the state of the art, according to that taught in the document US 7831350, a system to disable at least one information and entertainment device under certain conditions relative to the current driving environment of the user. The system uses a weighted matrix to assign risk to certain conditions detected whilst driving. A changed condition is assigned a weight and the weighted risks are summed to calculate the risk level information. The risk level information is thereafter compared to the priority level information associated with at least one information and entertainment device. When the risk level information exceeds or is equal to the priority level information of the at least one information and entertainment device, the system temporarily disables the information and entertainment device until the changes in the driving environment change to a condition wherein it is safe to operate the information and entertainment device.

There is also known in the state of the art, according to that taught in the document US 2011/0185390, a method of operating a driver information system including a coupling to a personal electronic device for the driver information system. The user selects an application from the driver information system utilizing input devices of the car. The input is transformed to match the input capabilities of the personal electronic device. The data is transmitted from the application to the electronic device. The data is processed within the electronic device. A result of the processing is transmitted from the electronic device to the driver information system. The information presented to the user via the driver information system is dependent upon the result of the processing.

There is also known in the state of the art, according to that taught in the document US 8682524, a view control system connected to a display device for displaying data in accordance with an information resource. The view control system includes a view control device. The view control device includes a determiner, a view regulator, and a resource data sender. The determiner regulates the visible output of the information resource. The view regulator associates regulatory data with the information resource in respect of determining the regulation of the visible output from the information resource. The resource data sender sends resource data including the information resource, the associated regulatory data, and a message to be transmitted to the visible output. That is to say, the message or the data generated in accordance with the information resource is sent to the display device.

There is also known in the state of the art, according to that taught in the closest prior-art document DE102011100941, a system that has a data acquisition unit to determine current state of a vehicle. An operating system executes an application with a graphic user interface (GUI), where the GUI comprises a number of elements and incorporates application information over the elements. A control unit selects the elements of the GUI to be displayed in the GUI of the application, where the selection is dependent on the determined state of the vehicle and the information incorporated over the elements.

There is also known in the state of the art, according to that taught in the document US2005038573, an invention operative to disable at least one infotainment device under certain conditions relative to the current driving environment of the user. The system uses a weighted matrix to assign risk to certain sensed conditions while driving. A changed condition is assigned a weight and the weighted risks are summed to calculate risk level information. The risk level information is thereafter compared to priority level information associated with at least one infotainment device. When the risk level information exceeds or is equal to the priority level information of the at least one infotainment device the system temporarily disables the infotainment device until the driving environment changes to a condition where it is safe to operate the infotainment device.

Consequently, and in view of the growing market in personal electronic devices, such as smart phones (or intelligent telephones) and tablets, there arises the necessity of facilitating the integration thereof into the infotainment system (or information and entertainment system) of the vehicle, having the objective of enhancing the quality of the driver's experience, not solely facilitating the interaction thereof with the applications already installed but additionally providing new services for use prior to, during, or subsequently to driving.

### DESCRIPTION OF THE INVENTION

According to the present invention, this task is solved by means of a procedure and a system for managing information between devices in an automotive vehicle according to Claims 1 and 10. Additional advantages of the invention are presented accompanying the characteristics included in the dependent Claims, referred to in the description summarized below.

Consequently, the objective of the invention is to facilitate the interaction between all the mobile electronic devices, or wearables, and the vehicle and, simultaneously, to reduce the distraction caused when interacting therewith. Having this objective, the present invention defines a procedure managing both the presentation of information on different graphic display devices, both internal and external to the vehicle, and the mode of interaction with the different applications in conformity with the driving scenario.

Some of these mobile electronic devices, or wearables, have their own screens whereon they show the information, for example head-mounted displays (HMDs) permit the display of information by means of a screen incorporated into a frame; smart glasses are one case. It is emphasized that some of these devices may be controlled by means of different interfaces using, inter alia, voice, movement and gesture commands.

The invention is essentially characterized by the following points:
- selection of an item of graphic information by the processing device to be displayed, comprising at least one content and at least one form to be displayed, and selection from among the plurality of graphic display devices of at least one graphic display device whereon to display each content together with the form thereof, based on the defined context and the detected information,
- transmission of the graphic information and/or the processed information and/or the context to the graphic display devices selected through the means of data transmission, more specifically, the graphic display devices may additionally dispose of a processing device. Solely and directly, the graphic information to be shown is transmitted through the means of data transmission to the graphic display devices not disposing of a processing device. Advantageously, the graphic information, the processed information and the context is transmitted through the means of data transmission to those devices disposing of a processing device of their own in order that said processing devices may determine which information they show on their own graphic display devices as a function of the context itself,
- display of an item of information on the graphic display devices selected.

In this manner the showing of items of information whilst driving is optimized, by means of which risks through distractions are reduced, whilst the driving experience is enhanced.

It is specified that by detected information there is understood the information arising from the exterior of the processing device, the origin whereof may be the very vehicle, or the external environment, or the state of the driver, or may even be input by the user by means of an operating device. By processed information there is understood the result of the processing of said information by the processing device, matching it to a series of standard parameters, consequently permitting a comparison with the model information previously input into the memory. By graphic information there is understood the set of symbols and figures which show either the detected information or other data which the processing device considers to be of interest for the user in conformity with the internal programming thereof.

Furthermore, by context there is understood a situation predefined by a series of variables or items of information, both from the environment, and from the vehicle and from the very user. Said variables or items of detected or input information will be compared with those previously assigned to each predefined situation to establish the context at each moment. Thus, the fact of having these items of information available renders it possible for the processing device to specify the context or environment wherein the user is at that instant, analysing for example, among other variables, the hazardousness of the driving environment. In that manner, as a function of the context or environment, and comparing it with values previously introduced into the programming or code of the control device, it will be possible to manage which items of information are relevant, and the best manner of showing them on the graphic display devices.

The contexts, or environments, are definable in the processing device thanks to the items of information gathered or detected by the means of sensing, rendering it much easier to assess, for example, the degree of concentration that the user must invest in the driving, consequently transmitting more or fewer items of information to the graphic display devices. This implies not solely managing the quantity of processed information which can be shown, but also on which of said graphic display devices it requires to be done, and with what appearance.

It is emphasized that, in essence, the procedure of the present invention defines what information can be displayed (the content), how it should be displayed (the form) and on which graphic display devices each of the items of information must be displayed, according to the defined context, for example a risk situation or a priority detected. Thus, the present invention sets out a procedure wherein, in the case of the coexistence of diverse devices capable of graphically displaying items of information, said items of information will not be mutually redundant and will be coherent. That is to say, if there is available a smart phone and/or a tablet and additionally the screens incorporated into an automotive vehicle (such as the screen of an instrument panel or the wireless screen), and/or a head-mounted display (virtual reality helmet or glasses) and/or a head-up display (frontal display screen), etc., it is necessary to manage that the items of information shown on all these devices be mutually coordinated and prevent each device from showing items of information in a redundant manner. For the operation of this management it is necessary that a processing device (which may be incorporated or not into one of the graphic display devices previously cited) receive all the items of information detected by the means of sensing, configuring a communication network through the means of data transmission, in order to proceed to the combined processing thereof and, finally, transmission to each graphic display device of the items of information it is most recommendable be shown.

In a more detailed manner, the stage of comparing the processed information by means of the processing device comprises comparing said processed information with other model information previously stored in a memory and determining the priority for showing said processed information. Thus, the processing device determines whether or not it shows the processed information on the graphic display devices as a function of said assessed priority. In this manner, redundancies or contradictions in showing items of information are avoided when diverse means of graphic display coexist, and overloading the driver's attention at inappropriate moments for such purpose is furthermore prevented.

According to another aspect of the invention, the user of the vehicle introduces an item of information by means of an operating device. The graphic display devices may dispose of operating devices utilized by the user to introduce a new input into the information gathered. In this manner, the user has the possibility of introducing items of information which may affect the manner of display of the items of information and the assignment of priorities.

Furthermore, the stage of processing the information comprises, in addition, analysing the information introduced by the user by means of the operating device and transmitted by the means of transmission to the processing device, to obtain the processed information. Thus, the processing device converts the detected information into processed information. In this manner, the detected information is matched to standard parameters permitting a better comparison between the processed information and the model information.

In a preferred embodiment of the invention, the stage of selecting the content of the graphic information to be shown on the plurality of graphic display devices comprises selecting from among the processed information that graphic information required by the defined context. In this manner the information better matches the specific situation wherein is the vehicle and/or the environment and/or the user.

The processed information comprises diverse variables and, depending on the context, solely that information considered relevant for the user is graphically displayed. That is to say, for each context there are some or other relevant items of information. Thus, once the detected information reaches the processing device it is processed and becomes an item of processed information. By means of a series of codes preinput into the processing device there is managed which information it is relevant to show, in which manner it is required to be shown, and on which of all the graphic display devices it is required to be shown.

It is emphasized that the fact of having available these items of information renders it possible for the processing device to define the context or environment wherein the user is at that instant. In that manner, as a function of the context or environment, and comparing it with values previously introduced into the programming or code of the processing device, it will be possible to manage which items of information are relevant and which is the best way of showing them on the graphic display devices which the communication network has at its disposal.

In addition, the fact that contexts or environments definable in the processing device on the basis of the detected items of information exist renders it simpler to assess the degree of concentration that the user must invest in the driving and, consequently, send more or less items of information to the graphic display devices, managing not solely the quantity of processed information which can be shown, but also on which of said graphic display devices it requires to be done and with what appearance.

Advantageously, the stage of selecting the form of the graphic information to be displayed on the plurality of graphic display devices comprises defining a visual appearance for the graphic information required by the defined context. In this manner the visual appearance of all the graphic display devices can be rendered uniform, enhancing the user's perception. It is also possible to highlight a priority item of information in relation to the remainder of the items of information.

Preferably, the stage of selecting from among the plurality of graphic display devices at least one graphic display device whereon to display each content together with the form thereof comprises selecting the means of graphic display required by the defined context and defining the graphic information to be transmitted to each means of graphic display required by the defined context. In this manner, the need to match to the driving environment all those mobile electronic devices or wearables incorporated into the daily life of the users is resolved.

Advantageously, the stage of displaying an item of information on the graphic display devices comprises comparing the value of the context with a predefined value to select the information to be displayed from among the graphic information or the processed information, together with the detected information, by means of a processing device of the graphic display device. More specifically, there exist at least two processing devices, on the one hand the principal or master processing device which carries out the stages of processing the detected information, comparing said detected information with the model information, defining the context and selecting the graphic information to be displayed. And, on the other hand, at least one second processing device of the graphic display device, comprising the stage of comparing the value of the context with a predefined value to select the item of information to be displayed from among the graphic information or the processed information, together with the detected information.

In addition to the transmission of the graphic information from the processing device which is defined for each of the graphic display devices, there is also transmitted the set of the processed information and the defined context. Should the graphic display device in question additionally have available a processing device of its own, this latter is capable of managing its own items of information together with those which the master processing device has transmitted thereto, such that the graphic display device itself self-configures the content and the form of the information which it shows, it furthermore being capable of showing information detected by the device itself, obviating the graphic information suggested by the principal or master processing device to be displayed. More specifically, in order that this may be possible it is necessary that the means of data transmission also communicate the context defined in the processing device, by virtue of the fact that it is a fundamental condition for the self-configuration of the information on the graphic display devices themselves that the context is favourable (that is to say, of little hazardousness). If, on the other hand, the context is not favourable, the graphic display devices must show the graphic information which has been configured and transmitted from the processing device.

Additionally, if the graphic display device does not dispose of a processing device, the information transmitted from the principal or master processing device to said graphic display device is exclusively the preconfigured graphic information.

In a preferred embodiment of the invention, the stage of transmitting the detected information to the processing device and the stage of transmitting the graphic information selected to the graphic display devices is performed by wireless means. In this manner it is not necessary to establish a wired connection between the diverse devices, permitting communication over a range of distance.

Alternatively, the stage of transmitting the detected information to the processing device and the stage of transmitting the graphic information selected to the graphic display devices is performed by wired means, achieving great reliability and speed in the transmission of information.

An object of the present invention is furthermore a system for managing information between devices in an automotive vehicle, following the previously-described procedure, comprising at least one processing device, a plurality of graphic display devices capable of presenting an item of information, a plurality of means of sensing capable of detecting an item of detected information of a state of the vehicle and/or of an environment and/or of a user, wherein the at least one processing device is in communication with the plurality of graphic display devices through means of data transmission by means whereof a selected item of graphic information (9) and/or an item of processed information and/or a context is transmitted. In this manner, the system permits showing the user the most pertinent information by the graphic display device most appropriate to the driving situation.

According to another aspect of the invention, at least one of the means of sensing and/or of the processing device and/or of the plurality of graphic display devices does not form part of the infrastructure of the vehicle. By not forming part of the infrastructure of the vehicle there is understood external to the vehicle, considering as such each and every one of the physical components thereof. In this manner the invention situates at least one of the means of sensing and/or of the processing device and/or of the plurality of graphic display devices in a mobile electronic device being more easily operated and transported by virtue of the smaller size thereof.

Advantageously, at least one of the graphic display devices comprises, additionally, means of sensing and/or a processing device and/or an operating device. In this manner the assessment of contexts or environments in the vehicle is enhanced by virtue of the fact that having more devices involved in the gathering of information inputs, the number and type of sensors is increased.

Thus, each of these graphic display devices cited has principally the function of graphically displaying items of information, but additionally they may contain sensorics, or means of sensing, capable of detecting a series of information inputs. Said information inputs detected by the sensorics, or means of sensing, of the vehicle itself, or of the graphic display devices, are sent to the processing device in the form of detected information.

Advantageously, the at least one processing device and the at least one of the graphic display devices are comprised in a smart phone. In this manner the user sees the items of information on a device wherewith he is very familiar, and having superior audiovisual characteristics.

Alternatively, the at least one of the graphic display devices not incorporated into the infrastructure of the vehicle is a wearable, or mobile electronic device, preferably a smart watch or smart glasses, being outstanding by virtue of the portability characteristics thereof. In a preferred embodiment of the invention, at least one of the plurality of the graphic display devices is incorporated into the vehicle. In this manner the user is not obliged to carry a smart phone, or wear a type of wearable, such as a smart watch or smart glasses.

In the attached drawings there is shown, in terms of non-limitative example, a procedure and system for managing information between devices in an automotive vehicle, constituted according to the invention. Other characteristics and advantages of said procedure and system for managing information between devices in an automotive vehicle, object of the present invention, will be evident from the description of a preferred embodiment, but non-exclusive, illustrated in terms of non-limitative example in the drawings attached, wherein:

### BRIEF DESCRIPTION OF THE DRAWINGS

Figure 1 is a first diagram of the operation of the procedure and of the system for managing information between devices in an automotive vehicle, according to the present invention;
Figure 2 is a second diagram of the operation of the procedure and of the system for managing information between devices in an automotive vehicle, according to the present invention;
Figure 3 is a third diagram of the operation of the procedure and of the system for managing information between devices in an automotive vehicle, according to the present invention.

### DESCRIPTION OF A PREFERRED EMBODIMENT

In view of the figures referred to, and in conformity with the numbering adopted, there may be observed therein an example of a preferred embodiment of the invention comprising the parts and elements stated and described in detail below.

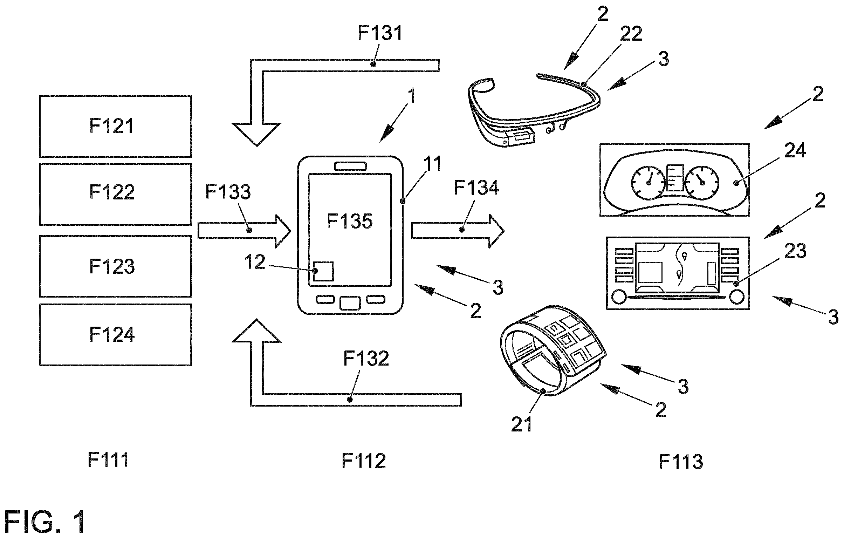

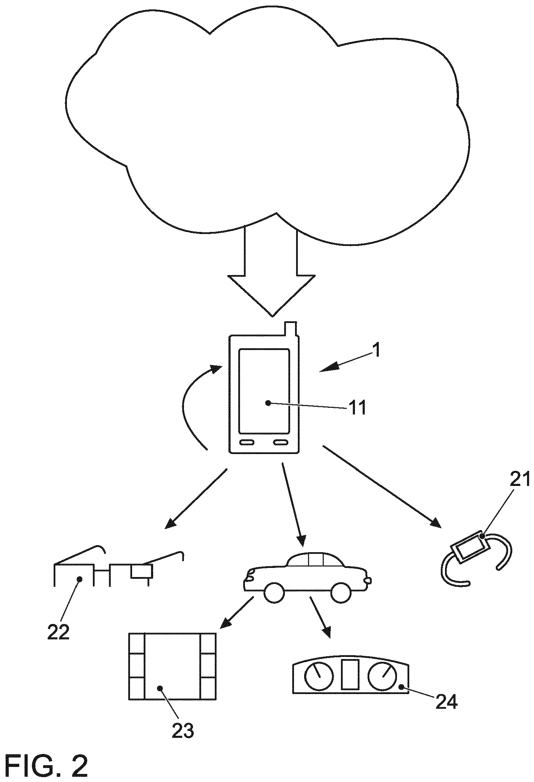

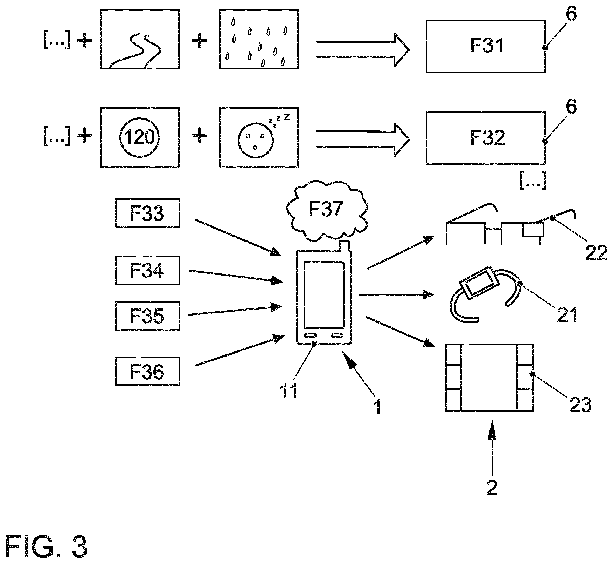

Consequently, as may be observed in figures 1, 2 and 3, the procedure for managing information between devices in an automotive vehicle, wherein the devices comprise at least one processing device 1, a plurality of graphic display devices 2, a plurality of means of sensing 4, wherein the at least one processing device 1 is in communication with the plurality of sensing devices 4 and with the plurality of graphic display devices 2 through means of data transmission 5, comprises the following stages:
- detection of an item of information of one state of the vehicle and/or of one environment and/or of one user through the plurality of means of sensing 4,
- transmission of said detected information 7 to the processing device 1 through the means of data transmission 5,
- processing of the detected information 7 in the processing device 1,
- comparison of said processed information 8 with a model item of information 10 previously stored in a memory 12,
- definition of a context 6 based on the comparison between the processed information 8 and the model information 10,
- selection by means of the processing device 1 of an item of graphic information 9 to be displayed, comprising at least one content and at least one form to be displayed, and selection from among the plurality of graphic display devices 2 at least one graphic display device 2 whereon to display each content together with the form thereof, based on the defined context 6 and the detected information 7,
- transmission of the graphic information 9 and/or the processed information 8 and/or the context 6 to the graphic display devices 2 selected through one or more the means of data transmission 5,
- display of an item of information on the graphic display devices 2 selected.

In order that the processing device 1 may process the context 6 wherein the user is at a given moment, it gathers all the inputs which the sensorics, or means of sensing 4, detect. In this manner it is possible to compare said inputs with values previously programmed into data matrices wherein, for example, curving road + wet surface + [other variables] yields a risk context A, or motorway + tiredness + [other variables] yields another context B, and so on successively.

More particularly, as may be observed in figures 1, 2 and 3, the stage of comparison of the processed information 8 by means of the processing device 1 comprises comparing said processed information 8 with other model information 10 previously stored in a memory 12 and determining the priority of showing said processed information 8.

According to a preferential embodiment of the invention, as may be observed in figures 1, 2 and 3, the user of the vehicle introduces an item of information by means of an operating device 3.

Preferably, one mode of embodiment would be that wherein the user decides to disable one of the graphic display devices 2, and would consequently make use of one of the operating devices 3 to make that information reach the processing device 1. Another mode of embodiment is that wherein by means of said operating devices 3 the user can give instructions (for example, change of song, control of climate, lights, windows, etc.) to the processing device 1.

Once the analysis and identification of a context 6 has been proceeded to, the processing device 1 controls which graphic display devices 2 are capable of showing information, and in which manner to do so in order for the best possible match to the context 6. For example, in a context A, it disables the appearance of information from social networks on the smart watch 21 and on the smart phone 11, and increases the font size on the smart glasses 22 and shows a recommended driving speed. In this manner the useful items of information are filtered such that they are not intrusive and may consequently distract the driver.

In addition to showing items of information on the different graphic display devices 2, the user can give instructions to the processing device 1 by means of any of the other free devices (smart watch 21 by a twist of the wrist, smart glasses 22 by a touch on the touchpad, or tactile pad, etc.) or even to the vehicle itself by means of any button of the central console, or instrument panel 24, or of the steering wheel. This instruction is considered to be a further data input in the processing of items of information in the processing device 1.

According to another aspect of the invention, as may be observed in figures 1, 2 and 3, the stage of processing the information comprises, additionally, analysing the information introduced by the user through the operating device 3 and transmitted by the means of transmission 5 to the processing device 1, to obtain the processed information 8.

More specifically, as may be observed in figures 1, 2 and 3, the stage of selecting the content of the graphic information 9 to be displayed on the plurality of graphic display devices 2 comprises selecting from among the processed information 8 that graphic information 9 required by the defined context 6.

According to a particular embodiment of the invention, as may be observed in figures 1, 2 and 3, the stage of selecting the form of the graphic information 9 to be displayed on the plurality of graphic display devices 2 comprises defining a visual appearance for the graphic information 9 required by the defined context 6.

Additionally, as may be observed in figures 1, 2 and 3, the stage of selecting from among the plurality of graphic display devices 2 at least one graphic display device 2 whereon to display each content together with the form thereof, comprises selecting the means of graphic display 2 required by the defined context 6 and defining the graphic information 9 to be transmitted to each means of graphic display 2 required by the defined context 6. Specifically, a series of devices is available such as a head-mounted display as first graphic display device 2 (for example, smart glasses 22) and/or a second graphic display device 2 (for example, a smart watch 21), together with other graphic display devices 2 incorporated into an automotive vehicle, such as a radio screen 23 or an instrument panel 24. In this mode of embodiment the smart phone 11 is responsible for managing the items of information, consequently it is a matter of a processing device 1 which also contains a possible graphic display device 2.

According to another particular embodiment of the invention, as may be observed in figures 1, 2 and 3, the stage of transmitting the detected information 7 to the processing device 1 and the stage of transmitting the selected graphic information 9 and/or an item of processed information 8 and/or a context 6 to the graphic display devices 2 is performed by wireless means, for example WLAN, Bluetooth, Bluetooth Smart, or other protocols having similar characteristics.

Alternatively, the stage of transmitting the detected information 7 to the processing device 1 and the stage of transmitting the selected graphic information 9 and/or an item of processed information 8 and/or a context 6 to the graphic display devices 2 is performed by wired means.

Advantageously, the stage of displaying an item of information on the graphic display devices 2 comprises comparing the value of the context 6 with a predefined value to select the information to be displayed from among the graphic information 9 or the processed information 8 together with the detected information 7 by means of a processing device of the graphic display device. More specifically, there exist at least two processing devices, on the one hand the principal or master processing device 1 which carries out the stages of processing the detected information 7, comparing said detected information with the model information 10, defining the context 6 and selecting the graphic information 9 to be displayed. And, on the other hand, at least a second processing device of the graphic display device 2 comprising the stage of comparing the value of the context 6 with a predefined value to select the information to be displayed from among the graphic information 9 or the processed information 8 together with the detected information 7.

There is also as object of the invention, as may be observed in figures 1, 2 and 3, a system for managing information between devices in an automobile vehicle, following the aforestated procedure, comprising at least one processing device 1, a plurality of graphic display devices 2 capable of presenting an item of graphic information 9 and/or an item of processed information 8, a plurality of means of sensing 4 capable of detecting an item of detected information 7 of a state of the vehicle and/or of an environment and/or of a user, wherein the at least one processing device 1 is in communication with the plurality of graphic display devices 2 through means of data transmission 5 via which is sent an item of processed information 8 and/or an item of graphic information 9 and/or a context 6.

More specifically, as may be observed in figures 1, 2 and 3, at least one of the means of sensing 4 and/or of the processing device 1 and/or of the plurality of graphic display devices 2 does not form part of the infrastructure of the vehicle.

According to a preferential embodiment of the invention, as may be observed in figures 1, 2 and 3, at least one of the graphic display devices 2 comprises, additionally, means of sensing 4. It is specified that some of the graphic display devices 2 are, simultaneously, means of sensing 4, by virtue of the fact that the screens themselves whereon the information is shown serve as an operating device 3 in order that the user can introduce inputs which the processing device 1 will process as a first detected item of information 7. Additionally, it can be exemplified that a wearable such as smart glasses 22 does not solely serve to display items of graphic information but also to detect movement (for example, head inclination), blinking, or other inputs via the lateral touchpad in the arm. Furthermore, the inputs which the sensorics, or means of sensing 4, detect may be for example physiological data, environmental data, data of the manner of driving, or other data.

More particularly, as may be observed in figures 1, 2 and 3, the at least one processing device 1 and the at least one of the graphic display devices 2 are comprised in a smart phone 11.

Additionally, as may be observed in figures 1, 2 and 3, the at least one of the graphic display devices 2 not forming part of the infrastructure of the vehicle is a wearable, preferably a smart watch 21 or smart glasses 22.

According to a particular embodiment of the invention, as may be observed from figure 1, at least one of the plurality of the graphic display devices 2 is incorporated into the vehicle, such as for example a radio screen 23 or a screen on the instrument panel 24.

### List of numerical references:

- 1: processing device
- 11: smart phone
- 12: memory
- 2: graphic display device
- 21: smart watch
- 22: smart glasses
- 23: radio screen
- 24: instrument panel
- 3: operating device
- 4: means of sensing
- 5: means of data transmission
- 6: context
- 7: detected information
- 8: processed information
- 9: graphic information
- 10: model information

### List of numerical references used as abbreviations of the text in the figures

- F111: Input
- F112: Processing
- F113: User Graphic Interface Adjustment
- F121: Physiological
- F122: Subjective
- F123: Operation: Primary tasks, secondary tasks
- F124: Environment
- F131: Feedback and biometric data
- F132: Feedback and biometric data
- F133: Input variables
- F134: Measurements
- F135: Driver workload calculation
- F31: Context A
- F32: Context B
- F33: Rain
- F34: Tiredness
- F35: Traffic jam
- F36: Low oil level
- F37: Context definition

## Claims

1. Procedure for managing information between devices in an automotive vehicle, wherein the devices comprise at least one processing device (1), a plurality of graphic display devices (2), a plurality of means of sensing (4), wherein the at least one processing device (1) is in communication with the plurality of means of sensing (4) and with the plurality of graphic display devices (2) through means of data transmission (5), comprising the following stages:
- detection of an item of information of one state of the vehicle and/or of one environment and/or of one user through the plurality of means of sensing (4),
- transmission of said detected information (7) to the processing device (1) through the means of data transmission (5),
- processing of the detected information (7) in the processing device (1),
- comparison of said processed information (8) with a model item of information (10) previously stored in a memory (12),
- definition of a context (6) based on the comparison between the processed information (8) and the model information (10),
**characterized in that** it further comprises the following stages:
- selection by means of the processing device (1) of an item of graphic information (9) to be displayed, comprising at least one content and at least one form to be displayed, and selection from among the plurality of graphic display devices (2) at least one graphic display device (2) whereon to display each content together with the form thereof, based on the defined context (6) and the detected information (7),
- transmission of the graphic information (9) and/or the processed information (8) and/or the context (6) to the selected graphic display devices (2) through the means of data transmission (5),
- display of an item of information on the selected graphic display devices (2).

2. Procedure for managing information between devices in an automotive vehicle according to Claim 1, **characterized in that** the user of the vehicle introduces an item of information by means of an operating device (3).

3. Procedure for managing information between devices in an automotive vehicle according to Claims 1 and 2, **characterized in that** the stage of processing the information comprises, additionally, analysing the information introduced by the user by means of the operating device (3) and transmitted by the means of transmission (5) to the processing device (1), to obtain the processed information (8).

4. Procedure for managing information between devices in an automotive vehicle according to Claim 1, **characterized in that** the stage of selecting the content of the graphic information (9) to be displayed on the plurality of graphic display devices (2) comprises selecting from among the processed information (8) that graphic information (9) required by the defined context (6).

5. Procedure for managing information between devices in an automotive vehicle according to Claim 1, **characterized in that** the stage of selecting the form of the graphic information (9) to be displayed on the plurality of graphic display devices (2) comprises defining a visual appearance for the graphic information (9) required by the defined context (6).

6. Procedure for managing information between devices in an automotive vehicle according to Claim 1, **characterized in that** the stage of selecting from among the plurality of graphic display devices (2) at least one graphic display device (2) whereon to display each content together with the form thereof comprises selecting the means of graphic display (2) required by the defined context (6) and defining the graphic information (9) to be transmitted to each means of graphic display (2) required by the defined context (6).

7. Procedure for managing information between devices in an automotive vehicle according to Claim 1, **characterized in that** the stage of transmitting the detected information (7) to the processing device (1) and the stage of transmitting the selected graphic information (9) and/or the processed information (8) and/or the context (6) to the graphic display devices (2) is performed by wireless means.

8. Procedure for managing information between devices in an automotive vehicle according to Claim 1, **characterized in that** the stage of transmitting the detected information (7) to the processing device (1) and the stage of transmitting the selected graphic information (9) and/or the processed information (8) and/or the context (6) to the graphic display devices (2) is performed by wired means.

9. Procedure for managing information between devices in an automotive vehicle according to Claim 1, **characterized in that** the stage of displaying an item of information on the graphic display devices (2) comprises comparing the value of the context (6) with a predefined value to select the information to be displayed from among the graphic information (9) or the processed information (8) together with the detected information (7) by means of a processing device of the graphic display device (2).

10. System for managing information between devices in an automotive vehicle, following the procedure of Claim 1, comprising at least one processing device (1), a plurality of graphic display devices (2) capable of presenting an item of information, a plurality of means of sensing (4) capable of detecting a detected item of information (7) of a state of the vehicle and/or of an environment and/or of a user, wherein the at least one processing device (1) is in communication with the plurality of graphic display devices (2) through means of data transmission (5) by means of which there is sent a selected item of graphic information (9) and/or an item of processed information (8) and/or a context (6).

11. System for managing information between devices in an automotive vehicle according to Claim 10, **characterized in that** the at least one of the means of sensing (4) and/or of the processing device (1) and/or of the plurality of graphic display devices (2) does not form part of the infrastructure of the vehicle.

12. System for managing information between devices in an automotive vehicle according to Claim 10, **characterized in that** the at least one of the graphic display devices (2) comprises, additionally, means of sensing (4) and/or a processing device (1) and/or an operating device (3).

13. System for managing information between devices in an automotive vehicle according to Claim 10 or 11, **characterized in that** the at least one processing device (1) and the at least one of the graphic display devices (2) are comprised in a smart phone (11).

14. System for managing information between devices in an automotive vehicle according to Claim 11, **characterized in that** the at least one of the graphic display devices (2) not forming part of the infrastructure the vehicle is a wearable, preferably a smart watch (21) or smart glasses (22).

15. System for managing information between devices in an automotive vehicle according to Claim 10, **characterized in that** the at least one of the plurality of the graphic display devices (2) is incorporated into the vehicle.

## Patentansprüche

1. Verfahren zur Verwaltung von Informationen zwischen Vorrichtungen in einem Kraftfahrzeug, wobei die Vorrichtungen mindestens eine Verarbeitungsvorrichtung (1), eine Vielzahl von grafischen Anzeigevorrichtungen (2), eine Vielzahl von Abfühlmitteln (4) umfassen, wobei die mindestens eine Verarbeitungsvorrichtung (1) durch Datenübertragungsmittel (5) in Kommunikation mit der Vielzahl von Abfühlmitteln (4) und mit der Vielzahl von grafischen Anzeigevorrichtungen (2) ist, umfassend die folgenden Stufen:
- Detektieren eines Informationselements eines Zustands des Fahrzeugs und/oder einer Umgebung und/oder eines Nutzers über die Vielzahl von Abfühlmitteln (4),
- Übertragen der detektierten Informationen (7) an die Verarbeitungsvorrichtung (1) über das Datenübertragungsmittel (5),
- Verarbeiten der detektierten Informationen (7) in der Verarbeitungsvorrichtung (1),
- Vergleichen der verarbeiteten Informationen (8) mit einem Modellinformationselement (10), das zuvor in einem Speicher (12) gespeichert wurde,
- Definieren eines Kontextes (6) basierend auf dem Vergleich zwischen den verarbeiteten Informationen (8) und den Modellinformationen (10),
**dadurch gekennzeichnet, dass** es ferner die folgenden Stufen umfasst:
- Auswählen eines anzuzeigenden grafischen Informationselements (9), welches mindestens einen anzuzeigenden Inhalt und mindestens eine anzuzeigende Form umfasst, mittels der Verarbeitungsvorrichtung (1), und Auswählen von mindestens einer grafischen Anzeigevorrichtung (2) von der Vielzahl der grafischen Anzeigevorrichtungen (2), worauf jeder Inhalt zusammen mit dessen Form basierend auf dem definierten Kontext (6) und den detektierten Informationen (7) angezeigt werden soll,
- Übertragen der grafischen Informationen (9) und/oder der verarbeiteten Informationen (8) und/oder des Kontextes (6) an die ausgewählten grafischen Anzeigevorrichtungen (2) durch das Datenübertragungsmittel (5),
- Anzeigen eines Informationselements auf den angezeigten grafischen Anzeigevorrichtungen (2).

2. Verfahren zur Verwaltung von Informationen zwischen Vorrichtungen in einem Kraftfahrzeug nach Anspruch 1, **dadurch gekennzeichnet, dass** der Nutzer des Fahrzeugs ein Informationselement mittels einer Betriebsvorrichtung (3) einbringt.

3. Verfahren zur Verwaltung von Informationen zwischen Vorrichtungen in einem Kraftfahrzeug nach den Ansprüchen 1 und 2, **dadurch gekennzeichnet, dass** die Stufe des Verarbeitens der Informationen zusätzlich Analysieren der Informationen umfasst, die durch den Nutzer mittels der Betriebsvorrichtung (3) eingebracht und durch das Übertragungsmittel (5) an die Verarbeitungsvorrichtung (1) übertragen wurden, um die verarbeiteten Informationen (8) zu erhalten.

4. Verfahren zur Verwaltung von Informationen zwischen Vorrichtungen in einem Kraftfahrzeug nach Anspruch 1, **dadurch gekennzeichnet, dass** die Stufe des Auswählens des Inhalts der auf der Vielzahl der grafischen Anzeigevorrichtungen (2) anzuzeigenden Informationen (9) Auswählen jener grafischen Informationen (9) von den verarbeiteten Informationen (8) umfasst, die durch den definierten Kontext (6) erforderlich sind.

5. Verfahren zur Verwaltung von Informationen zwischen Vorrichtungen in einem Kraftfahrzeug nach Anspruch 1, **dadurch gekennzeichnet, dass** die Stufe des Auswählens der auf der Vielzahl von grafischen Anzeigevorrichtungen (2) anzuzeigenden grafischen Informationen (9) Definieren eines visuellen Erscheinungsbildes für die grafischen Informationen (9) umfasst, das durch den definierten Kontext (6) erforderlich ist.

6. Verfahren zur Verwaltung von Informationen zwischen Vorrichtungen in einem Kraftfahrzeug nach Anspruch 1, **dadurch gekennzeichnet, dass** die Stufe des Auswählens mindestens einer grafischen Anzeigevorrichtung (2), auf der jeder Inhalt zusammen mit dessen Form angezeigt werden soll, aus der Vielzahl der grafischen Anzeigevorrichtungen (2) Auswählen des grafischen Anzeigemittels (2), das durch den definierten Kontext (6) erforderlich ist, und Definieren der an jedes grafische Anzeigemittel (2) zu übertragenen grafischen Informationen (9) umfasst, die durch den definierten Kontext (6) erforderlich sind.

7. Verfahren zur Verwaltung von Informationen zwischen Vorrichtungen in einem Kraftfahrzeug nach Anspruch 1, **dadurch gekennzeichnet, dass** die Stufe des Übertragens der detektierten Informationen (7) an die Verarbeitungsvorrichtung (1) und die Stufe des Übertragens der ausgewählten grafischen Informationen (9) und/oder der verarbeiteten Informationen (8) und/oder des Kontextes (6) an die grafischen Anzeigevorrichtungen (2) durch Drahtlosmittel durchgeführt wird.

8. Verfahren zur Verwaltung von Informationen zwischen Vorrichtungen in einem Kraftfahrzeug nach Anspruch 1, **dadurch gekennzeichnet, dass** die Stufe des Übertragens der detektierten Informationen (7) an die Verarbeitungsvorrichtung (1) und die Stufe des Übertragens der ausgewählten grafischen Informationen (9) und/oder der verarbeiteten Informationen (8) und/oder des Kontextes (6) an die grafischen Anzeigevorrichtungen (2) durch verdrahtete Mittel durchgeführt wird.

9. Verfahren zur Verwaltung von Informationen zwischen Vorrichtungen in einem Kraftfahrzeug nach Anspruch 1, **dadurch gekennzeichnet, dass** die Stufe des Anzeigens eines Informationselements auf den grafischen Anzeigevorrichtungen (2) Vergleichen des Wertes des Kontextes (6) mit einem vordefinierten Wert umfasst, um die anzuzeigenden Informationen aus den grafischen Informationen (9) oder den verarbeiteten Informationen (8) zusammen mit den detektierten Informationen (7) mittels einer Verarbeitungsvorrichtung der grafischen Anzeigevorrichtung (2) auszuwählen.

10. System zur Verwaltung von Informationen zwischen Vorrichtungen in einem Kraftfahrzeug gemäß dem Verfahren nach Anspruch 1, umfassend mindestens eine Verarbeitungsvorrichtung (1), eine Vielzahl grafischer Anzeigevorrichtungen (2), die ein Informationselement präsentieren können, eine Vielzahl von Abfühlmitteln (4), die ein detektiertes Informationselement (7) eines Zustands des Fahrzeugs und/oder einer Umgebung und/oder eines Nutzers detektieren können, wobei die mindestens eine Verarbeitungsvorrichtung (1) durch Datenübertragungsmittel (5), mithilfe derer ein ausgewähltes grafisches Informationselement (9) und/oder ein verarbeitetes Informationselement (8) und/oder ein Kontext (6) gesendet wird, in Kommunikation mit der Vielzahl grafischer Anzeigevorrichtungen (2) ist.

11. System zur Verwaltung von Informationen zwischen Vorrichtungen in einem Kraftfahrzeug nach Anspruch 10, **dadurch gekennzeichnet, dass** mindestens eines der Abfühlmittel (4) und/oder der Verarbeitungsvorrichtung (1) und/oder der Vielzahl von grafischen Anzeigevorrichtungen (2) keinen Teil der Infrastruktur des Fahrzeugs bildet.

12. System zur Verwaltung von Informationen zwischen Vorrichtungen in einem Kraftfahrzeug nach Anspruch 10, **dadurch gekennzeichnet, dass** die mindestens eine der grafischen Anzeigevorrichtungen (2) zusätzlich Abfühlmittel (4) und/oder eine Verarbeitungsvorrichtung (1) und/oder eine Betriebsvorrichtung (3) umfasst.

13. System zur Verwaltung von Informationen zwischen Vorrichtungen in einem Kraftfahrzeug nach Anspruch 10 oder 11, **dadurch gekennzeichnet, dass** mindestens eine Verarbeitungsvorrichtung (1) und die mindestens eine der grafischen Anzeigevorrichtungen (2) in einem Smartphone (11) enthalten sind.

14. System zur Verwaltung von Informationen zwischen Vorrichtungen in einem Kraftfahrzeug nach Anspruch 11, **dadurch gekennzeichnet, dass** die mindestens eine der grafischen Anzeigevorrichtungen (2), die keinen Teil der Infrastruktur des Fahrzeugs bildet, ein Wearable, vorzugsweise eine Smartwatch (21) oder eine intelligente Brille (Smart Glasses) (22) ist.

15. System zur Verwaltung von Informationen zwischen Vorrichtungen in einem Kraftfahrzeug nach Anspruch 10, **dadurch gekennzeichnet, dass** mindestens eine von der Vielzahl der grafischen Anzeigevorrichtungen (2) in das Fahrzeug eingebaut ist.

## Revendications

1. Procédure de gestion d'informations entre des dispositifs dans un véhicule automobile, les dispositifs comprenant au moins un dispositif de traitement (1), une pluralité de dispositifs d'affichage graphiques (2), une pluralité de moyens de détection (4), l'au moins un dispositif de traitement (1) étant en communication avec la pluralité de moyens de détection (4) et avec la pluralité de dispositifs d'affichage graphiques (2) par le biais de moyens de transmission de données (5), comprenant les étapes suivantes :
- détection d'un élément d'informations d'un état du véhicule et/ou d'un environnement et/ou d'un utilisateur par le biais de la pluralité de moyens de détection (4),
- transmission desdites informations détectées (7) au dispositif de traitement (1) par le biais des moyens de transmission de données (5),
- traitement des informations détectées (7) dans le dispositif de traitement (1),
- comparaison desdites informations traitées (8) avec un élément d'informations (10) de modèle stocké précédemment dans une mémoire (12),
- définition d'un contexte (6) basé sur la comparaison entre les informations traitées (8) et les informations de modèle (10),
**caractérisée en ce qu'**elle comprend en outre les étapes suivantes :
- sélection, grâce au dispositif de traitement (1), d'un élément d'informations graphique (9) à afficher, comprenant au moins un contenu et au moins une forme à afficher, et sélection, parmi la pluralité de dispositifs d'affichage graphiques (2), d'au moins un dispositif d'affichage graphique (2) sur lequel afficher chaque contenu conjointement avec la forme de celui-ci, sur la base du contexte (6) défini et des informations (7) détectées,
- transmission des informations graphiques (9) et/ou des informations traitées (8) et/ou du contexte (6) aux dispositifs d'affichage graphiques (2) sélectionnés par le biais des moyens de transmission de données (5),
- affichage d'un élément d'informations sur les dispositifs d'affichage graphiques (2) sélectionnés.

2. Procédure de gestion d'informations entre des dispositifs dans un véhicule automobile selon la revendication 1, **caractérisée en ce que** l'utilisateur du véhicule introduit un élément d'informations grâce à un dispositif de commande (3).

3. Procédure de gestion d'informations entre des dispositifs dans un véhicule automobile selon les revendications 1 et 2, **caractérisée en ce que** l'étape de traitement d'informations consiste, en plus, à analyser les informations introduites par l'utilisateur grâce au dispositif de commande (3) et transmises par les moyens de transmission (5) au dispositif de traitement (1), pour obtenir les informations traitées (8) .

4. Procédure de gestion d'informations entre des dispositifs dans un véhicule automobile selon la revendication 1, **caractérisée en ce que** l'étape de sélection du contenu des informations graphiques (9) à afficher sur la pluralité de dispositifs d'affichage graphiques (2) consiste à sélectionner parmi les informations traitées (8) ces informations graphiques (9) requises par le contexte défini (6).

5. Procédure de gestion d'informations entre des dispositifs dans un véhicule automobile selon la revendication 1, **caractérisée en ce que** l'étape de sélection de la forme des informations graphiques (9) à afficher sur la pluralité de dispositifs d'affichage graphiques (2) consiste à définir une apparence visuelle pour les informations graphiques (9) requises par le contexte défini (6).

6. Procédure de gestion d'informations entre des dispositifs dans un véhicule automobile selon la revendication 1, **caractérisée en ce que** l'étape de sélection parmi la pluralité de dispositifs d'affichage graphiques (2) d'au moins un dispositif d'affichage graphique (2) sur lequel afficher chaque contenu conjointement avec la forme de celui-ci consiste à sélectionner les moyens d'affichage graphique (2) requis par le contexte défini (6) et définissant les informations graphiques (9) à transmettre à chacun des moyens d'affichage graphique (2) requis par le contexte défini (6).

7. Procédure de gestion d'informations entre des dispositifs dans un véhicule automobile selon la revendication 1, **caractérisée en ce que** l'étape de transmission des informations détectées (7) au dispositif de traitement (1) et l'étape de transmission des informations graphiques (9) sélectionnées et/ou des informations traitées (8) et/ou du contexte (6) aux dispositifs d'affichage graphiques (2) sont réalisées par des moyens sans fil.

8. Procédure de gestion d'informations entre des dispositifs dans un véhicule automobile selon la revendication 1, **caractérisée en ce que** l'étape de transmission des informations détectées (7) au dispositif de traitement (1) et l'étape de transmission des informations graphiques (9) sélectionnées et/ou des informations traitées (8) et/ou du contexte (6) aux dispositifs d'affichage graphiques (2) sont réalisées par des moyens filaires.

9. Procédure de gestion d'informations entre des dispositifs dans un véhicule automobile selon la revendication 1, **caractérisée en ce que** l'étape d'affichage d'un élément d'informations sur les dispositifs d'affichage graphiques (2) consiste à comparer la valeur du contexte (6) à une valeur prédéfinie pour sélectionner les informations à afficher parmi les informations graphiques (9) ou les informations traitées (8) conjointement avec les informations détectées (7) grâce à un dispositif de traitement du dispositif d'affichage graphique (2).

10. Système de gestion d'informations entre des dispositifs dans un véhicule automobile, suivant la procédure selon la revendication 1, comprenant au moins un dispositif de traitement (1), une pluralité de dispositifs d'affichage graphiques (2) capables de présenter un élément d'informations, une pluralité de moyens de détection (4) capables de détecter un élément d'informations (7) détecté d'un état du véhicule et/ou d'un environnement et/ou d'un utilisateur, l'au moins un dispositif de traitement (1) étant en communication avec la pluralité de dispositifs d'affichage graphiques (2) par le biais de moyens de transmission de données (5) grâce auxquels on envoie un élément sélectionné d'informations graphiques (9) et/ou un élément d'informations traitées (8) et/ou un contexte (6).

11. Système de gestion d'informations entre des dispositifs dans un véhicule automobile selon la revendication 10, **caractérisé en ce que** l'au moins un des moyens de détection (4) et/ou du dispositif de traitement (1) et/ou de la pluralité de dispositifs d'affichage graphiques (2) ne font pas partie de l'infrastructure du véhicule.

12. Système de gestion d'informations entre des dispositifs dans un véhicule automobile selon la revendication 10, **caractérisé en ce que** l'au moins un des dispositifs d'affichage graphiques (2) comprennent, en plus, des moyens de détection (4) et/ou un dispositif de traitement (1) et/ou un dispositif de commande (3).

13. Système de gestion d'informations entre des dispositifs dans un véhicule automobile selon la revendication 10 ou 11, **caractérisé en ce que** l'au moins un dispositif de traitement (1) et l'au moins un des dispositifs d'affichage graphiques (2) sont inclus dans un téléphone intelligent (11).

14. Système de gestion d'informations entre des dispositifs dans un véhicule automobile selon la revendication 11, **caractérisé en ce que** l'au moins un des dispositifs d'affichage graphiques (2) ne formant pas partie de l'infrastructure du véhicule sont de préférence une montre intelligente (21) ou des lunettes intelligentes (22) portables.

15. Système de gestion d'informations entre des dispositifs dans un véhicule automobile selon la revendication 10, **caractérisé en ce que** l'au moins un de la pluralité de dispositifs d'affichage graphiques (2) est intégré dans le véhicule.
